# EUROPEAN PATENT APPLICATION

(11) **EP 1 690 650 A1**
(43) Date of publication of application: **16.08.2006**
(21) Application number: 03777224.1
(22) Date of filing: 03.12.2003
(51) Int. Cl.: B25J 9/06

(54) **LINK OPERATING DEVICE**

(71) Applicant: NTN CORPORATION, Osaka-shi, Osaka 550-0003 (JP)
(72) Inventor: Sone, Keisuke, Iwata-shi, Shizuoka 438-0037 (JP); Nakakoji, Masafumi, Iwata-shi, Shizuoka 438-0037 (JP); Iwamoto, Kenichi, Iwata-shi, Shizuoka 438-0037 (JP)
(74) Representative: Eder, Christian
(86) International application number: PCT/JP2003/015505
(87) International publication number: WO 2005/053913

(57) **Abstract**

A linkage system is provided which is equipped with a compact and high-rigidity link mechanism with a large load capacity. The linkage system includes three or more link mechanisms. Each link mechanism consists of a center link member and end link members rotatably coupled to the center link member and to link hubs that are provided to an input member and an output member, respectively. An input side and an output side of a center cross-sectional plane of each link mechanism are geometrically identical. One or more of revolute joints of two or more of the link mechanisms that are coupled to the input member are provided with a stopping mechanism for stopping the output member at a given position.

## Description

### BACKGROUND OF THE INVENTION

### 1. Field of the Invention

The present invention relates to a linkage system for use as a link mechanism such as a parallel link mechanism or a robot joint that performs complex processing or handling of goods in a three-dimensional space at high speed and with high precision.

### 2. Description of the Related Art

An operating device equipped with a parallel link mechanism that performs complex processing or handling of goods in a three-dimensional space at high speed and with high precision is known (see, for example, Japanese Patent Laid-Open Publication No. 2000-94245).

This operating device includes a parallel link mechanism, which has a plurality of links that connect a base plate and a traveling plate and cooperatively extend and retract to change the position and orientation of the traveling plate relative to the base plate. Tool is attached to the traveling plate of this parallel link mechanism, while a workpiece is held on a table which is designed rotatable so that the tool can freely change its position and orientation relative to the workpiece on the table and perform complex processing or handling of goods in a three-dimensional space.

Main characteristic features of such parallel link mechanism are that the weight of the movable parts can be reduced, and positioning errors of several links are evened-out at the distal ends, both of which are advantageous for the complex processing or handling of goods in a three-dimensional space at high speed and with high precision.

On the other hand, if the operating range of the traveling plate needs to be increased, the links have to be extended because each link has a relatively small operating angle range, which increases the size of the parallel link mechanism and causes bulkiness of the entire operating device. Further, because of low rigidity of the mechanism, the weight of the tool carried on the traveling plate, i.e., the load capacity of the traveling plate, has to be limited to a small range.

### SUMMARY OF THE INVENTION

An object of the present invention is to provide a linkage system equipped with a compact and high-rigidity link mechanism with a large load capacity.

The linkage system according to the present invention includes three or more link mechanisms, each consisting of a center link member and end link members rotatably coupled to the center link member and to link hubs that are provided to an input member and an output member, respectively, wherein an input side and an output side of a center cross-sectional plane of each link mechanism are geometrically identical, and wherein one or more of revolute joints of two or more of the link mechanisms that are coupled to the input member are provided with a stopping mechanism for stopping the output member at a given position.

Due to the structure with three or more link mechanisms, the system of the present invention has high rigidity and large lord capacity of the output member, and also the system can be easily made more compact. Further, the output member is readily positioned because of the stopping mechanism for stopping the output member at a given position in the revolute joints of two or more of the link mechanisms that are coupled to the link hub of the input member. The reason why the stopping mechanism is provided to the revolute joints of two or more of the link mechanisms is for determining the position of the output member relative to the input member.

The input member and the output member are coupled together by three or more link mechanisms, each link mechanism having a geometrically identical shape. The reason why three or more link mechanisms are provided is to construct a 2-degree-of-freedom system with the input member and the output member. "Input side and output side of the center cross-sectional plane of the link mechanism are geometrically identical" here means that the input and output sides of each link mechanism have a geometrically identical shape if it is divided along the symmetrical plane of the center link member. Each link mechanism forms a three-link chain with four revolute joints. The end link members on both input and output sides are spherical links. The spherical link center coincides in three or more link mechanisms, each being equally distanced from the center. The shafts of the revolute joints that couple the end link member and the center link member can either be arranged at an angle or parallel with each other. Either way, the center link members of the three or more link mechanisms have a geometrically identical shape.

The stopping mechanism, in this invention, should preferably have a structure that increases rotation torque at the revolute joints. For example, the revolute joints may have a bearing structure, with a negative bearing clearance, to achieve the above-mentioned structure that increases rotation torque. This structure also reduces backlash between the input and output members and enables high-precision position control of the output member.

Alternative structures of the stopping mechanism include a ratchet mechanism provided in the revolute joints, or an actuator for freely controlling the rotation angle of the revolute joints. The stopping mechanism can be provided in two or more of the revolute joints on the link hub of one of the input member and the output member.

A passage for supplying a control medium from the input member to the output member may be arranged in an inner space enclosed by the link mechanisms, which is preferable in that wiring and tubing will be easy.

### BRIEF DESCRIPTION OF THE DRAWINGS

In the accompanying drawings:
Fig. 1 is a perspective view illustrating a linkage system according to one embodiment of the present invention equipped with a stopping mechanism having a ratchet structure;
Fig. 2 is a front view illustrating one of the link mechanisms of Fig. 1;
Fig. 3 is a plan view illustrating one of the link mechanisms of Fig. 1;
Fig. 4A is an enlarged, partially cross-sectional front view illustrating relevant parts of the stopping mechanism having the ratchet structure of Fig. 1, and Fig. 4B is a side view of Fig. 4A;
Fig. 5 is an enlarged, partially cross-sectional front view illustrating relevant parts of another example of the stopping mechanism in another embodiment of the present invention;
Fig. 6 is a perspective view illustrating a linkage system according to yet another embodiment of the present invention, equipped with a rotary motor type stopping mechanism;
Fig. 7 is a perspective view illustrating a linkage system according to a further embodiment of the present invention, equipped with a stopping mechanism made up of a pinion, a rack, and a linear actuator;
Fig. 8 is a perspective view illustrating a linkage system with a pneumatic linear actuator mounted to the output member of Fig. 6 in another embodiment of the present invention; and
Fig. 9 is a partially cross-sectional view illustrating a link mechanism provided with a protection member for the air hose of the linear actuator of Fig. 8 in yet another embodiment of the present invention.

### DETAILED DESCRIPTION OF THE PREFERRED EMBODIMENTS

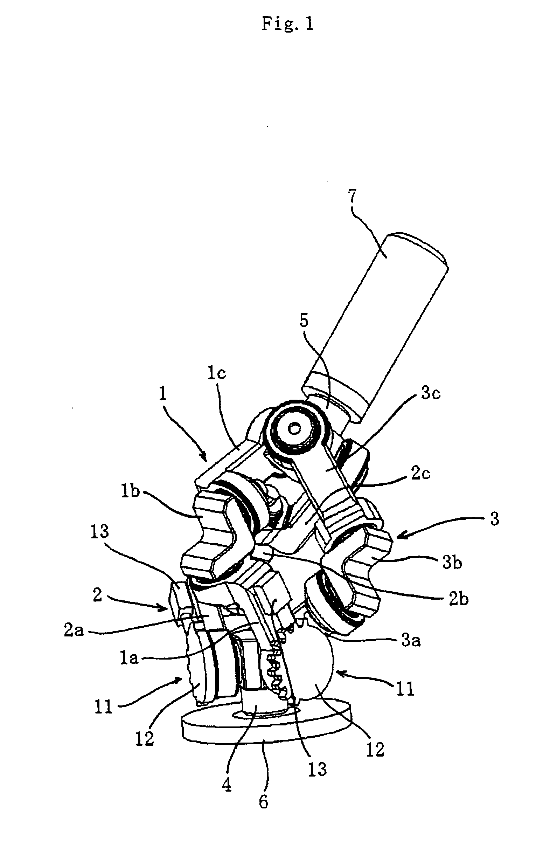

The embodiment shown in Fig. 1 includes three sets of link mechanisms 1 to 3 for use, for example, as a parallel link mechanism or a robot joint that performs complex processing or handling of goods in a three-dimensional space at high speed and with high precision.

An input member 6 and an output member 7 are coupled together by the three link mechanisms 1 to 3 (first to third link mechanisms), each link mechanism having a geometrically identical shape. The input member 6 is mounted to an input-side component of equipment in which this operating device is incorporated, which is, for example, a stationary part, and the output member 7 is attached to the output-side component of the equipment, which is, for example, a movable part. In this embodiment, as illustrated, the input member 6 has a disc-like shape, while the output member 7 has a shaft-like shape.

Each link mechanism 1 to 3 forms a three-link chain, including an input end link member 1a (2a, 3a), a center link member 1b (2b, 3b), an output end link member 1c (2c, 3c), and four revolute joints. The end link members 1a to 3a, 1c to 3c are coupled to the input member 6 and the output member 7 respectively, with spherical links. The spherical link center coincides in the three link mechanisms 1 to 3, each being equally distanced from the center. The shafts of revolute joints that couple the center link members 1b to 3b to the end link members 1a to 3a, 1c to 3c may be arranged at an angle, or parallel. Either way, all the center link members 1b to 3b of the three link mechanisms 1 to 3 have a geometrically identical shape.

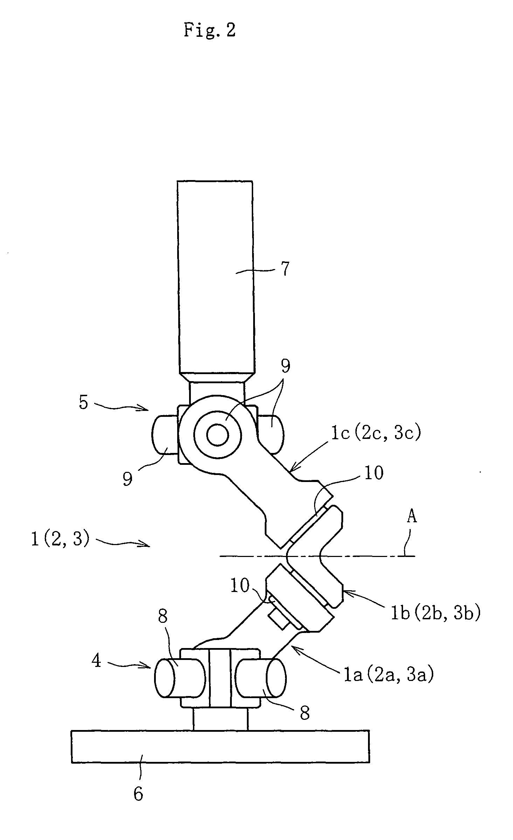

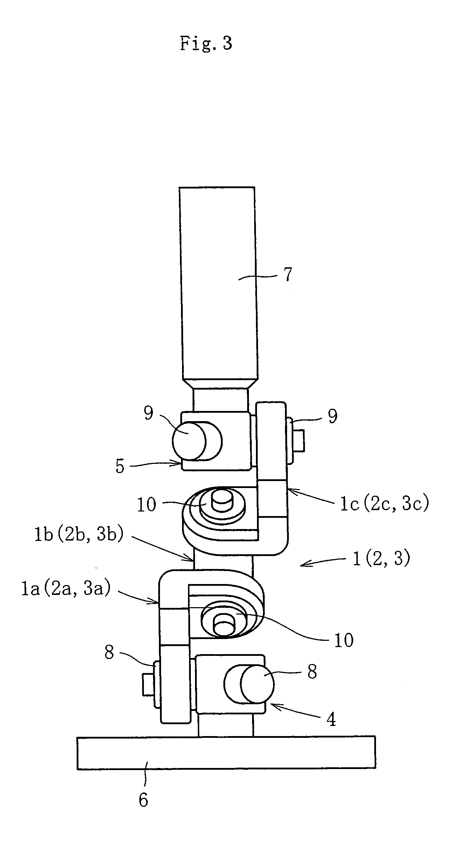

One set of link mechanism 1 (2, 3) includes, as shown in Fig. 2 and Fig. 3, two link hubs 4 and 5 respectively provided to the input member 6 and output member 7, two end link members 1a (2a, 3a) and 1c (2c, 3c) rotatably coupled to both link hubs 4 and 5, and one center link member 1b (2b, 3b) rotatably coupled to both end link members 1a (2a, 3a) and 1c (2c, 3c) to couple them together. The input link hub 4 and the input end link members 1a to 3a are positioned in rotation symmetry with the output link hub 5 and the output end link members 1c to 3c relative to the center line A of the center link members 1b to 3b so as to achieve a large operating angle.

The link hubs 4 and 5 respectively include three radially extending leg shafts 8 and 9. The leg shafts 8 or 9 are at right angles with the input member 6 or the output member 7 because of the rotation symmetry design of the link mechanisms 1 to 3. The leg shafts 8 and 9 need not be equally located in circumferential direction, but the input link hub 4 and the output link hub 5 must be in the same circumferential position. The link hubs 4 and 5 are shared by the three sets of link mechanisms 1 to 3, the end link members 1a to 3a, 1c to 3c being respectively coupled to the leg shafts 8 and 9.

The end link members 1a to 3a, 1c to 3c are L-shaped, and include a hole for rotatably coupling the leg shaft 8 or 9 of the link hub 4 or 5 on one side of the L, and a hole for rotatably coupling a leg shaft 10, which will be described later, of the center link member 1b (2b, 3b) on the other side of the L. The hole on the link hub side is at right angles with the hole on the center link member side, because of the rotation symmetry design of the link mechanisms 1 to 3.

The center link members 1b to 3b are L-shaped, and include leg shafts 10 on both sides, which are coupled to the holes of the input end link members 1a to 3a and the output end link members 1c to 3c. The shaft legs 10 on the input side and output side make an angle in the practical range of 40° to 100°. This is because, if the angle is smaller than 40°, the outside diameter of the center link members 1b to 3b will be too large, and if the angle is larger than 100°, then the center link members 1b to 3b will be too long in the axial direction and also the operating angle range will be reduced because of mechanical interference.

When the angle and length of the leg shafts of the link hubs 4 and 5 and the geometrical construction of the input end link members 1a to 3a and the output end link members 1c to 3c are identical, and the center link members 1b to 3b have the same shape on both input and output sides, and when the input and output end link members 1a to 3a and 1c to 3c (respectively coupled to the leg shafts 8 and 9 of the link hubs 4 and 5 and the center link members 1b to 3b) are at the same angular positions relative to the symmetric plane of the center link members 1b to 3b, then the input link hub 4 and the end link members 1a to 3a move identically with the output link hub 5 and the end link members 1c to 3c because of the geometric symmetry, and the input member 6 and the output member 7 take the same rotation angles, rotating at the same speed. The symmetrical plane of the center link members 1b to 3b is here called "constant velocity bisecting plane."

As the geometrically identical link mechanisms 1 to 3 between the input link hub 4 and the output link hub 5 are circumferential arranged, the center link members 1b to 3b move only along the constant velocity bisecting plane so that all the link mechanisms 1 to 3 can move without interfering with each other, whereby the input member 6 and the output member 7 rotate at the same speed at any operating angle.

The four revolute joints in each link mechanism 1 (2, 3), i.e., two joints between the end link members 1a (2a, 3a) and 1c (2c, 3c) and the leg shafts 8 and 9 of the link hubs 4 and 5, and two joints between the end link members 1a (2a, 3a) and 1c (2c, 3c) and the leg shafts 10 of the center link member 1b (2b, 3b) have a bearing structure, and therefore friction resistance or rotation resistance at the joints is low, whereby smooth power transmission is ensured and durability improved. Examples of the bearing structure include ball bearings, double row angular ball bearings, and four-point contact ball bearings, or, roller bearings or spherical bearings may also be used.

By applying preload to eliminate radial clearance and thrust clearance in this bearing structure, chattering in the joints is reduced, whereby there is no phase difference between the input member 6 and the output member 7 so that they always rotate at the same speed, and vibration or noise is prevented. By providing negative bearing clearance in the bearing structure, in particular, backlash between the input member 6 and the output member 7 is reduced.

In the embodiment shown in Fig. 1, two of the revolute joints coupled to the input member 6, i.e., the joints between the input link hub 4 and the end link members 1a and 2a of the first and second link mechanisms 1 and 2, each include a stopping mechanism 11 for causing the output member 7 to pause at a given position.

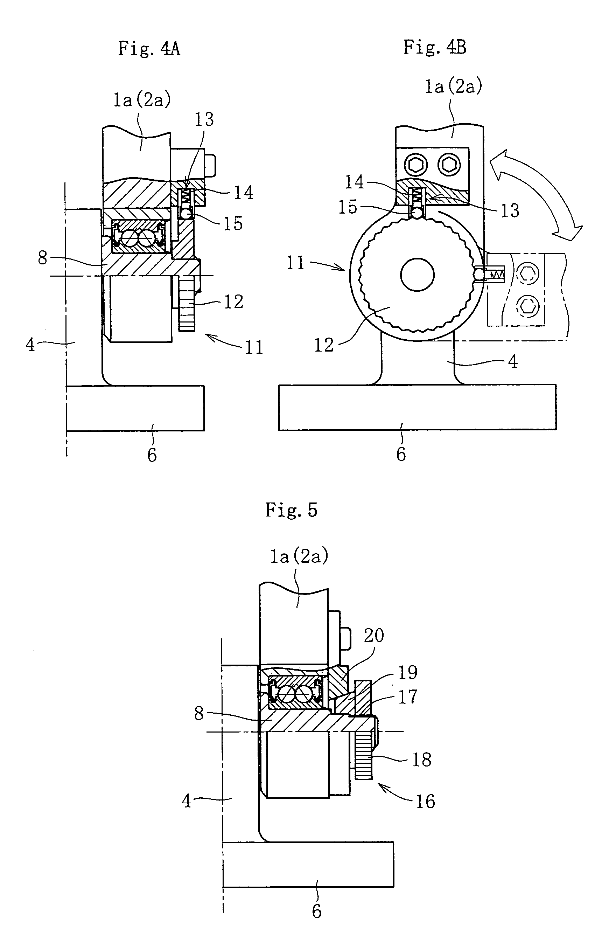

The stopping mechanism 11 has a ratchet structure including a gear 12 and a stopper 13, as shown in Fig. 4A and Fig. 4B. The gear 12 is integrally secured to the leg shaft 8 of the link hub 4, while the stopper 13 is securely attached to the end link member 1a or 2a, with a ball 15 retractably making contact with a gear surface by the resilience of a spring 14. With this stopping mechanism 11 having a ratchet structure provided to the first and second link mechanisms 1 and 2, the moving output member 7 can be stopped at any desired position, by the ball 15 engaging with the gear 12 in the stopping mechanism 11 by the resilience of the spring 14.

Fig. 5 shows a stopping mechanism 16 in another embodiment of the present invention, having a different structure from the stopping mechanism 11 shown in Fig. 4A and Fig. 4B. This stopping mechanism 16 is also provided to the joints between the input link hub 4 and end link members 1a and 2a of the first and second link mechanisms 1 and 2.

The stopping mechanism 16 in this embodiment includes a disc-like stopper 18 engaged with a screw shaft 17 provided to the leg shaft 8 of the link hub 4, the stopper 18 having a tapered outer surface 19 reducing in diameter in the axial direction, which is configured to engage with the inner surface of an annular stopper receiver 20 attached to the end link member 1a or 2a. The stopper 18 and the stopper receiver 20 are formed such that they retain each other by predetermined friction resistance between the tapered outer surface 19 of the stopper 18 and the inner surface of the stopper receiver 20. With this stopping mechanism 16 having a screw-in structure, the moving output member 7 can be stopped at any desired position, by the friction resistance between the tapered outer surface 19 and the inner surface of the stopper receiver 20 when the stopper 18 engaged with the screw shaft 17 is screwed into.

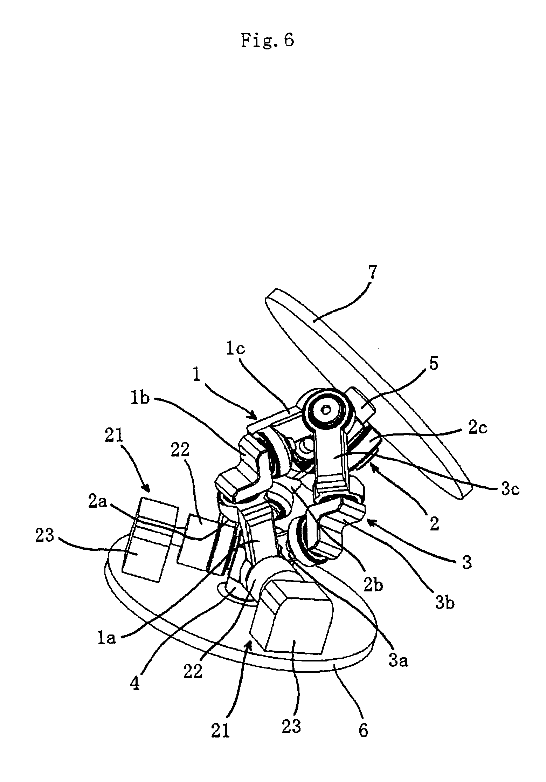

Fig. 6 shows yet another embodiment of the present invention, in which the stopping mechanism 21 provided to the first and second link mechanisms 1 and 2 includes an actuator, which is a rotary motor 22, in the joints between the input link hub 4 and the end link members 1a and 2a. The rotary motor 22 is secured to a motor base 23 mounted on the input member 6, and the output shaft is secured to the end link member 1a or 2a. The output shaft of the rotary motor 22 is arranged orthogonal to the rotating direction of the end link members 1a and 2a. The output member 7 can be stopped at any desired position by controlling the rotation of this rotary motor 22 by a motor controller (not shown).

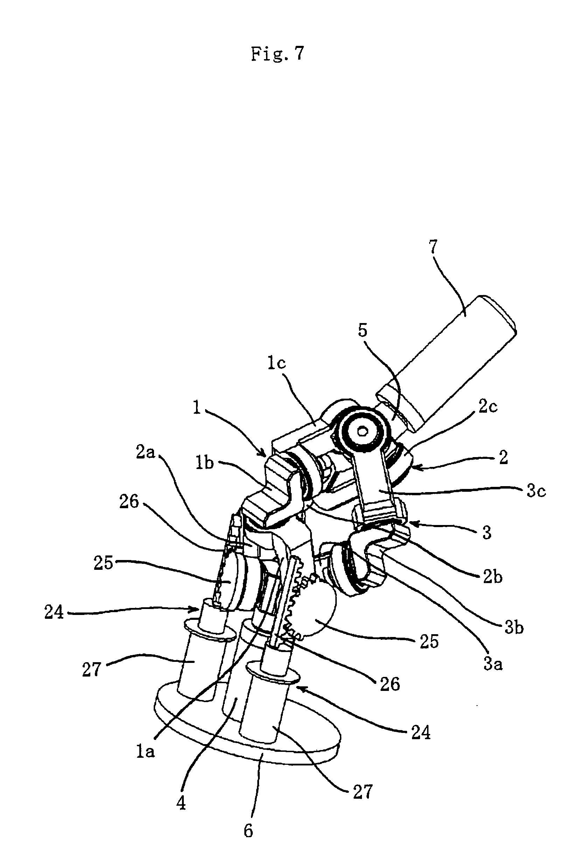

Fig. 7 shows a further embodiment of the present invention, in which the stopping mechanism 24 provided to the first and second link mechanisms 1 and 2 includes an actuator, which is made up of a pinion 25, a rack 26, and a linear mechanism 27 in the joints between the input link hub 4 and the end link members 1a and 2a. The linear mechanism 27 is mounted on the input member 6, and the pinion 25 engaging with the rack 26 provided at the tip of the linear mechanism 27 is secured to the end link member 1a or 2a. The linear mechanism 27 moves the rack 26 back and forth to rotate the pinion 25 engaging with the rack 26, to stop the output member 7 at any desired position.

With the embodiments shown in Fig. 6 and Fig. 7, if the input member 6 is secured in position, the rotary motor 22 or rotation control actuator made up of the pinion 25, the rack 26, and the linear mechanism 27 can be arranged on the input member 6 which is the stationary side, so that the movable range of the output member 7 can be set large without any worries of dragging the actuator wires. Also, as the output member 7 which is the moving side has no rotation control actuator on it, moment of inertia is small and high-speed movement is possible.

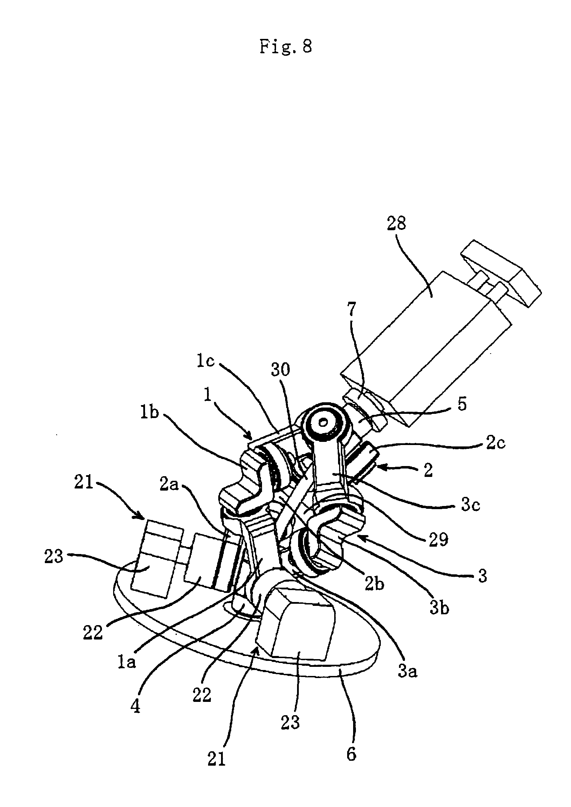

Fig. 8 shows another embodiment, which is a variation of the embodiment shown in Fig. 6, with a pneumatic linear actuator 28 secured to the tip of the output member 7. In this embodiment, an air hose 30 is provided to extend through the inner space 29 enclosed by the three link mechanisms 1 to 3 to form an air passage, and compressed air (control medium) required for the operation of this actuator 28 is supplied through this air hose 30 between the input member 6 and the output member 7.

Efficient use of space is achieved by making use of the inner space 29 enclosed by the three link mechanisms 1 to 3. Wires and the like required for the pneumatic equipment or electric actuator disposed on the output member 7 may also be arranged in the inner space 29 inside the link mechanisms 1 to 3 so that they pose no hindrance to the movement of the output member 7 and do not interfere with other components.

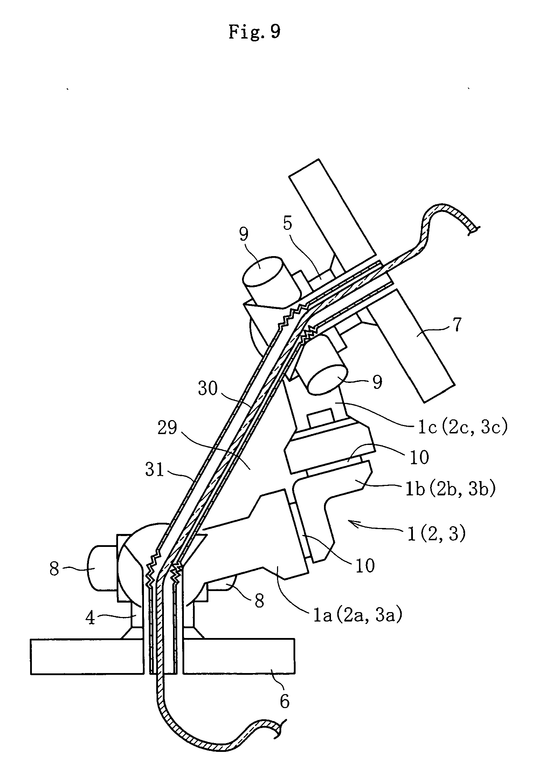

Instead of the pneumatic actuator 28 as with this embodiment, an electric motor or a processing tool can be mounted, with the wiring and tubing being similarly accommodated in the inner space 29 defined by the link mechanisms 1 to 3. Also as shown in Fig. 9, a protection member 31 may be provided to protect the air hose 30. This protection member 31 includes bellows in the centers of spherical parts of the input and output members 6 and 7 to follow changes in the angle of the input or output member 6 or 7.

## Claims

1. A linkage system comprising three or more link mechanisms, each consisting of a center link member and end link members rotatably coupled to the center link member and to link hubs that are provided to an input member and an output member, respectively, wherein an input side and an output side of a center cross-sectional plane of each link mechanism are geometrically identical, and wherein one or more of revolute joints of two or more of the link mechanisms that are coupled to the input member are provided with a stopping mechanism for stopping the output member at a given position.

2. A linkage system according to claim 1, wherein the stopping mechanism has a structure that increases rotation torque at the revolute joints.

3. A linkage system according to claim 2, wherein the revolute joints each have a bearing structure with a negative bearing clearance.

4. A linkage system according to claim 1, wherein the stopping mechanism has a ratchet mechanism provided in the revolute joints.

5. A linkage system according to claim 1, wherein the stopping mechanism has an actuator for freely controlling the rotation angle of the revolute joints.

6. A linkage system according to any one of claims 2 to 5, wherein the stopping mechanism is provided in two or more of the revolute joints on the link hub of one of the input member and the output member.

7. A linkage system according to any one of claims 1 to 5, wherein a passage for supplying a control medium from the input member to the output member is arranged in an inner space enclosed by the link mechanisms.

8. A linkage system according to claim 6, wherein a passage for supplying a control medium from the input member to the output member is arranged in an inner space enclosed by the link mechanisms.
